(19) Europäisches Patentamt / European Patent Office / Office européen des brevets

(11) **EP 4 769 688 A1**

(12) **EUROPEAN PATENT APPLICATION**
published in accordance with Art. 153(4) EPC

(43) Date of publication:
01.07.2026 Bulletin 2026/27

(21) Application number: 24891867.4

(22) Date of filing: 13.11.2024

(51) International Patent Classification (IPC):
$H01M\ 50/131^{(2021.01)}$    $H01M\ 50/126^{(2021.01)}$
$H01M\ 50/133^{(2021.01)}$    $H01M\ 50/121^{(2021.01)}$
$H01M\ 50/105^{(2021.01)}$    $B32B\ 27/08^{(2006.01)}$

(52) Cooperative Patent Classification (CPC):
B32B 27/08; H01M 50/105; H01M 50/121;
H01M 50/126; H01M 50/131; H01M 50/133;
Y02E 60/10

(86) International application number:
PCT/KR2024/096532

(87) International publication number:
WO 2025/105921 (22.05.2025 Gazette 2025/21)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.11.2023 KR 20230157720

(71) Applicant: LG Energy Solution, Ltd.
Seoul 07335 (KR)

(72) Inventors:
• HWANG, Soo Ji
Daejeon 34122 (KR)

• LEE, Wan Soo
Daejeon 34122 (KR)
• YU, Hyung Kyun
Daejeon 34122 (KR)
• SONG, Dae Woong
Daejeon 34122 (KR)
• SHIN, Ji Hyun
Daejeon 34122 (KR)
• KIM, Gi Woung
Daejeon 34122 (KR)

(74) Representative: Plasseraud IP
104 Rue de Richelieu
CS92104
75080 Paris Cedex 02 (FR)

(54) **POUCH FILM LAMINATE, MANUFACTURING METHOD THEREFOR, AND POUCH-TYPE SECONDARY BATTERY**

(57) The present invention relates to a pouch film laminate comprising a stretching auxiliary layer, a gas barrier layer, and a sealant layer, sequentially laminated, wherein the stretching auxiliary layer comprises sequentially laminated a first stretched nylon film layer and a second stretched nylon film layer, and the pouch film laminate has a $TS_{TM}$ value represented by Equation 1 of 0.80 to 1.24.

[Equation 1]

$$TS_{TM} = (TS_T)/(TS_M)$$

In Equation 1, $TS_T$ is a TD direction tensile strength (N/15 mm) of the pouch film laminate, and $TS_M$ is a MD direction tensile strength (N/15 mm) of the pouch film laminate.

EP 4 769 688 A1

[FIG. 1]

**Description**

**TECHNICAL FIELD**

**Cross-reference to Related Applications**

This application claims the benefit of Korean Patent Application No. 10-2023-0157720, filed on November 14, 2023, in the Korean Intellectual Property Office, the contents of which are incorporated herein by reference.

**Technical Field**

The present invention relates to a pouch film laminate, a method for manufacturing the same and a pouch-type secondary battery.

**BACKGROUND ART**

Typically, secondary batteries are manufactured by applying electrode active material slurries to a positive electrode current collector and a negative electrode current collector to manufacture a positive electrode and a negative electrode, and laminating them on both sides of a separator to form an electrode assembly of a predetermined shape, then accommodating the electrode assembly in a battery case, injecting an electrolyte, and sealing.

Secondary batteries are classified into pouch types, can types, and the like, depending on the material of the case that accommodates the electrode assembly. The pouch type accommodates an electrode assembly in a pouch made of a flexible polymer material. And, the can type accommodates an electrode assembly in a case made of a material such as metal or plastic.

The pouch-type battery case is manufactured by performing press processing on a flexible pouch film laminate to form a cup part. And, if the cup part is formed, the electrode assembly is accommodated in the accommodation space of the cup part, and a sealing part is sealed to manufacture a secondary battery.

Among the press processes, drawing molding is performed by inserting a pouch film into a press machine and applying pressure to a pouch film laminate with a punch to stretch the pouch film laminate. The pouch film laminate is generally formed by multiple layers in which a polymer film such as polyethylene terephthalate is laminated on one side of a metal material gas barrier layer, and a sealant layer is laminated on the other side.

Recently, as the demand for high-capacity batteries such as electric vehicle batteries and ESS batteries increases, the demand for battery cases that may accommodate more electrode assemblies is increasing. Accordingly, a two-cup molding method is being attempted in which the cup part molding depth of a pouch-type battery case is increased, or the cup part is formed in each of the upper and lower cases to increase a cup part volume.

In the conventional pouch film laminate manufacturing, a substrate layer and/or a metal barrier layer were manufactured thickly in order to increase the cup part volume. However, there are problems in that the cup part molding depth is not sufficiently increased, or the thickness of the pouch film laminate is thickened, resulting in a decrease in energy density, a decrease in the ease of moisture drying, and a decrease in insulation.

Therefore, there is a need to develop a pouch film laminate having excellent insulation and ease of moisture drying without causing cracks even if the cup part molding depth is increased.

**DISCLOSURE OF THE INVENTION**

**TECHNICAL PROBLEM**

The present invention is to solve the above problems and provides a pouch film laminate having excellent moldability, insulation, and ease of moisture drying by controlling the ratio of tensile strengths in the MD direction and the TD direction of the pouch film laminate to a certain level or less, while using a double layer of stretched nylon films, a pouch-type battery case, and a pouch-type secondary battery.

The tasks of the present invention are not limited to the task mentioned above, and other tasks not mentioned may be clearly understood by those skilled in the art from the description below.

**TECHNICAL SOLUTION**

[0012]

　　[1] The present invention provides a pouch film laminate comprising a stretching auxiliary layer, a gas barrier layer, and a sealant layer, sequentially laminated, wherein the stretching auxiliary layer comprises a first stretched nylon film layer and a second stretched nylon film layer, sequentially laminated, and the pouch film laminate has a $TS_{TM}$ value represented by Equation 1 below of 0.80 to 1.24.

$$[Equation\ 1]$$

$$TS_{TM}\ =\ (TS_T)/(TS_M)$$

In Equation 1, $TS_T$ is a TD direction tensile strength (N/15 mm) of the pouch film laminate, and $TS_M$ is a MD direction tensile strength (N/15 mm) of the pouch film laminate.

[2] In the present invention of [1], a thickness of the stretching auxiliary layer may be 10 $\mu$m to 80 $\mu$m.

[3] In the present invention of [1] or [2], a thickness of the first stretched nylon film layer may be 5 $\mu$m to 40 $\mu$m.

[4] In the present invention of at least one of [1] to [3] a thickness of the second stretched nylon film layer may be 5 $\mu$m to 40 $\mu$m.

[5] In the present invention of at least one of [1] to [4], the first stretched nylon film layer and the second stretched nylon film layer may be formed of the same material.

[6] In the present invention of at least one of [1] to [5], the pouch film laminate may have $T_N$ represented by Equation 2 below of 1.5 or more.

$$[Equation\ 2]$$

$$T_N\ =\ (T_{N,A})/(T_{N,B})$$

In Equation 2, $T_{N,A}$ is a toughness of the stretching auxiliary layer, and $T_{N,B}$ is a toughness of a stretching auxiliary layer formed of a single-layer stretched nylon film having a thickness of 15 $\mu$m.

[7] In the present invention of at least one of [1] to [6], a surface protection layer formed on the stretching auxiliary layer may be further comprised.

[8] In the present invention of at least one of [1] to [7], a thickness of the gas barrier layer may be 20 $\mu$m to 150 $\mu$m.

[9] In the present invention of at least one of [1] to [8], a thickness of the sealant layer may be 30 $\mu$m to 130 $\mu$m.

[10] The present invention provides a method for manufacturing a pouch film laminate, the method comprising: a step of sequentially laminating a first stretched nylon film layer and a second stretched nylon film layer to manufacture a stretching auxiliary layer; and a step of sequentially laminating the stretching auxiliary layer, a gas barrier layer, and a sealant layer to manufacture a pouch film laminate, wherein the first stretched nylon film layer and the second stretched nylon film layer are arranged with stretching directions intersecting each other.

[11] In the present invention of [10], the first stretched nylon film layer and the second stretched nylon film layer may be arranged so that stretching directions intersect at an angle of 75° to 90°.

[12] The present invention provides a pouch-type secondary battery comprising a pouch-type battery case manufactured by drawing molding the pouch film laminate of at least one of [1] to [9].

## ADVANTAGEOUS EFFECTS

The pouch film laminate according to the present invention has a higher breakdown voltage if a pinhole occurs than a pouch film laminate using the conventional stretched nylon film with a single-layer structure, and is easy to dry moisture, so as to achieve excellent insulation and processability.

The pouch film laminate according to the present invention may achieve better moldability by reducing the imbalance in tensile properties such as tensile strength and toughness according to the directionality of the pouch film laminate, by controlling the stretching direction and the lamination direction of extended nylon films when laminating double-layer stretched nylon films.

## BRIED DESCRIPTION OF DRAWINGS

The drawings attached to this specification illustrate preferred embodiments of the present invention and, together with the contents of the invention described above, serve to better understand the technical idea of the present invention, so the present invention is not limited to matters described in the drawings. Meanwhile, the shape, size, scale, or ratio of elements in the drawings included in this specification may be exaggerated to emphasize a clearer explanation.

FIG. 1 is a cross-sectional view of a pouch film laminate according to an embodiment of the present invention.

FIG. 2 is a cross-sectional view of a pouch film laminate according to an embodiment of the present invention.

FIG. 3 is an exploded assembly diagram of a secondary battery according to an embodiment of the present invention.

FIG. 4 is a conventional sequential lamination method of a stretching auxiliary layer.

FIG. 5 is a diagram showing a sequential lamination method of a stretching auxiliary layer according to an embodiment of the present invention.

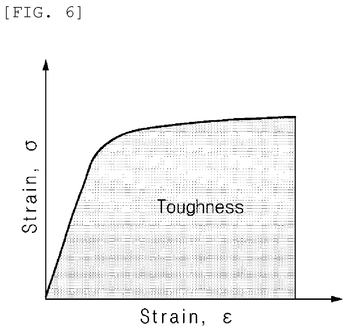

FIG. 6 is an illustration of a stress-strain curve for measuring toughness according to Experimental Example 2 of the present invention.

## BEST MODE FOR CARRYING OUT THE INVENTION

Hereinafter, the present invention will be explained in more detail.

Words or terms used in the present description and claims shall not be interpreted as the meaning defined in commonly used dictionaries. The words or terms should be interpreted as having a meaning that is consistent with the technical idea of the invention, based on the principle that an inventor may properly define the meaning of the words or terms to best explain the invention.

In the present invention, a MD direction (Machine Direction) means the longitudinal direction of a pouch film laminate, and a TD direction (Transverse Direction) means the width direction of a pouch film laminate.

The inventors of the present invention found that a pouch-type secondary battery having excellent moldability, insulation, and ease of moisture drying may be achieved by controlling the tensile strength ratio in the MD direction and TD direction according to each thickness and the stretching direction of the stretched nylon film during lamination, while using a double layer of stretched nylon films as a stretching auxiliary layer, and thus completed the present invention.

The pouch film laminate according to the present invention, the method for manufacturing the same, and the pouch-type secondary battery include at least one of the disclosed configurations below, and may include any combination between technically possible configurations among the configurations below.

### Pouch Film Laminate

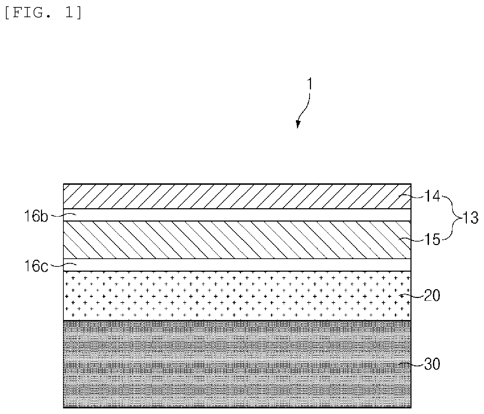

FIG. 1 illustrates an embodiment of a pouch film laminate according to the present invention. Hereinafter, the pouch film laminate according to the present invention will be described with reference to FIG. 1.

Referring to FIG. 1, the pouch film laminate (1) according to the present invention includes a stretching auxiliary layer (13), a gas barrier layer (20), and a sealant layer (30), sequentially laminated, and the stretching auxiliary layer (13) includes a first stretched nylon film layer (14) and a second stretched nylon film layer (15), sequentially laminated, and the pouch film laminate (1) has a $TS_{TM}$ value represented by Equation 1 below of 0.80 to 1.24.

$$[\text{Equation 1}]$$

$$TS_{TM} = (TS_T)/(TS_M)$$

In Equation 1, $TS_T$ is a tensile strength in the TD direction (N/15 mm) of the pouch film laminate, and $TS_M$ is a tensile strength in the MD direction (N/15 mm) of the pouch film laminate.

When manufacturing the conventional pouch film laminate, the thicknesses of a substrate layer (stretching auxiliary layer and surface protection layer) and/or a metal barrier layer were manufactured thick in order to increase a cup part volume. However, even if the thicknesses are thick, there are problems such as insufficient increase in a cup part molding depth and thickening of the pouch film laminate, thereby reducing energy density, deteriorating ease of moisture drying, and deteriorating insulation. In particular, if a nylon film thicker than the conventional commercially available nylon film with a thickness of 15 μm or 25 μm is used as the stretching auxiliary layer, additional process costs may be consumed, and the problem of the thickness becoming thicker to make moisture drying difficult may occur.

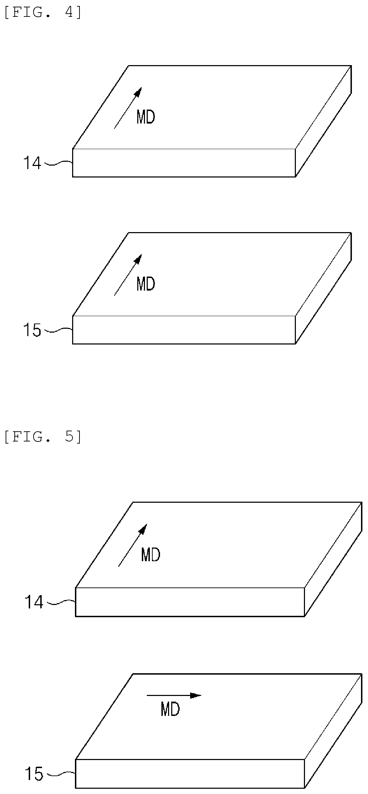

In addition, the stretched nylon film has mechanical properties suitable for molding a pouch film laminate compared to the non-stretched nylon film, but the stretched nylon film has directionality due to the characteristics thereof. In this case, the mechanical properties such as tensile strength and elongation may change between the stretching direction and the vertical direction, and since pouch molding is performed by stretching in all directions, if the tensile properties differ depending on the direction, there may be a problem of reducing moldability due to the imbalance of the properties. For example, as shown in FIG. 4, if each stretched nylon film is stretched in the MD direction and the stretched nylon films are arranged in a double layer so that the stretching directions are located on the same line to manufacture a stretching auxiliary layer, the breakdown voltage is high when a pinhole occurs in one layer of the stretched nylon film, and moisture drying may be easy, because the stretching auxiliary layer is composed of a double layer compared to the stretched nylon film including a single layer. However, since the stretched nylon films in the double layer are arranged so that the stretching directions are located on the same line, there may be a problem of reducing moldability due to the imbalance of tensile properties such as tensile strength and toughness depending on the direction.

Therefore, the pouch film laminate according to the present invention, for example, as shown in FIG. 5, is configured as a stretching auxiliary layer by forming a double layer of stretched nylon films, and the stretched nylon films of the double layer, having different stretching directions are included in the pouch film laminate to solve the above-described problem.

Specifically, each of the stretched nylon films included in the double layer of stretched nylon films is included in the pouch film laminate so as to have different stretching directions. That is, since the pouch film laminate having the double layer of stretched nylon film layers is manufactured to be isotropic, the breakdown voltage may be high if a pinhole occurs due to the double-layer configuration, and moisture drying may be easy, and in addition, since the pouch film laminate is manufactured to be isotropic, excellent moldability may be realized.

According to an embodiment of the present invention, the pouch film laminate (1) has a $TS_{TM}$ value represented by Equation 1 below of 0.80 to 1.24, preferably 0.85 or more, 0.90 or more, or 0.95 or more, and may be 1.20 or less, 1.15 or less, 1.10 or less, or 1.05 or less, and may be preferably 0.95 to 1.05.

$$[Equation\ 1]$$

$$TS_{TM} = (TS_T)/(TS_M)$$

In Equation 1, $TS_T$ is the tensile strength (N/15 mm) of the pouch film laminate in the TD direction, and $TS_M$ is the tensile strength (N/15 mm) of the pouch film laminate in the MD direction.

If the $TS_{TM}$ value is less than 0.80 or greater than 1.24, the difference in tensile properties of the stretched nylon films in the pouch film laminate is significant depending on the direction, and a problem occurs in which the moldability is reduced during molding a cup part in the pouch film laminate. In addition, even if the cup part molding is performed, since the tensile properties in one direction are reduced, there is a problem that cracks are likely to occur when an external force is applied in the direction in which the tensile properties are reduced. Therefore, if the above range is satisfied, the tensile properties according to the direction of the pouch film laminate are similar, so that excellent moldability may be achieved, while preventing cracks from occurring due to an external force.

According to an embodiment of the present invention, the $TS_T$ may be 150 N/15 mm to 320 N/15 mm, preferably 160 N/15 mm or more, 170 N/15 mm or more, 180 N/15 mm or more, or 189 N/15 mm or more, and may be 320 N/15 mm or less, 300 N/15 mm or less, 280 N/15 mm or less, or 265 N/15 mm or less, and more preferably 189 N/15 mm to 265 N/15 mm. If the range is satisfied, it may be preferable in that excellent toughness of the pouch film laminate may be achieved while also achieving an excellent molding depth.

According to an embodiment of the present invention, the $TS_M$ may be 150 N/15 mm to 320 N/15 mm, preferably 160 N/15 mm or more, 170 N/15 mm or more, 180 N/15 mm or more, or 182 N/15 mm or more, and may be 320 N/15 mm or less, 300 N/15 mm or less, 280 N/15 mm or less, or 260 N/15 mm or less, and more preferably 182 N/15 mm to 260 N/15 mm. If the above range is satisfied, it may be preferable in that excellent toughness of the pouch film laminate may be achieved while also achieving an excellent molding depth.

Hereinafter, each configuration will be described in more detail.

**(Stretching Auxiliary Layer)**

The stretching auxiliary layer (13) is arranged on the outer layer of a battery case to assist the stretching of the pouch film laminate (1) so as not to be easily broken if stretching of the pouch film laminate (1) occurs during the molding process of the pouch film laminate (1).

According to an embodiment of the present invention, the thickness of the stretching auxiliary layer (13) may be 10 $\mu$m to 80 $\mu$m, preferably 20 $\mu$m to 70 $\mu$m, more preferably 35 $\mu$m to 65 $\mu$m, and even more preferably 40 $\mu$m to 60 $\mu$m. If the range is satisfied, excellent moldability of the pouch film laminate may be secured, while preventing a decrease in the energy density per volume of a secondary battery due to the excessive thickness of the pouch film laminate.

The stretching auxiliary layer (13) includes a first stretched nylon film layer (14) and a second stretched nylon film layer (15), that are sequentially laminated.

According to an embodiment of the present invention, the thickness of the first stretched nylon film layer (14) may be 5 $\mu$m to 40 $\mu$m, preferably 10 $\mu$m to 30 $\mu$m, more preferably 10 $\mu$m to 25 $\mu$m, and even more preferably 15 $\mu$m to 20 $\mu$m. If the range is satisfied, excellent moldability of the pouch film laminate may be secured, while preventing a decrease in the energy density per volume of a secondary battery due to the excessive thickness of the pouch film laminate. In addition, it is also preferable in terms of facilitating moisture drying.

According to an embodiment of the present invention, the thickness of the second stretched nylon film layer (15) may be 5 $\mu$m to 40 $\mu$m, preferably 15 $\mu$m to 40 $\mu$m, more preferably 20 $\mu$m to 35 $\mu$m, and even more preferably 20 $\mu$m to 30

µm. If the range is satisfied, excellent moldability of the pouch film laminate may be secured, while preventing a decrease in the energy density per volume of a secondary battery due to excessive thickness of the pouch film laminate. In addition, it is preferable in terms of facilitating moisture drying.

According to an embodiment of the present invention, the first stretched nylon film layer (14) and the second stretched nylon film layer (15) may each independently include a stretched nylon film obtained by stretching a nylon film, which is a polyamide-based film. Specifically, the first stretched nylon film layer and the second stretched nylon film layer may each independently be a stretched nylon film layer obtained by stretching a nylon film layer including at least one selected from the group consisting of nylon 6,6, nylon MXD6 (polyxylylene adipamide), nylon 4, nylon 4,6, and nylon 4,10. If the condition is satisfied, it is preferable in terms of each stretched nylon film layer having excellent tensile strength and elongation and excellent chemical resistance.

According to an embodiment of the present invention, the first stretched nylon film layer (14) and the second stretched nylon film layer (15) may be the same material or may be different materials, but preferably, the first stretched nylon film layer (14) and the second stretched nylon film layer (15) may be the same material. If the condition is satisfied, it may be preferable in terms of maximizing the physical properties or characteristics of a specific stretched nylon film layer. For example, if nylon 6,6 is used as the first stretched nylon film layer (14), nylon 6,6 may also be used as the second stretched nylon film layer (15).

According to an embodiment of the present invention, the first stretched nylon film layer (14) and the second stretched nylon film layer (15) may each independently include a uniaxially stretched nylon film.

According to an embodiment of the present invention, the first stretched nylon film layer (14) may include a uniaxially stretched nylon film. In this case, stretching means a method of imparting orientation to a specific material by pulling at between the softening temperature and the melting temperature of the material in the MD direction or TD direction, and then cooling. Therefore, a nylon film stretched in one direction is called a uniaxially stretched nylon film, and a uniaxially stretched nylon film stretched once more in a direction perpendicular to the uniaxial direction is called a biaxially stretched nylon film. If the first stretched nylon film layer (14) includes a uniaxially stretched nylon film, better flexibility and elasticity may be achieved than a case of including a biaxially stretched film, and excellent processability and cost-saving effects may be achieved.

According to an embodiment of the present invention, the second stretched nylon film layer (15) may include a uniaxially stretched nylon film. In this case, stretching means a method of imparting orientation to a specific material by pulling at between the softening temperature and the melting temperature in the MD direction or TD direction, and then cooling. Therefore, a nylon film stretched in one direction is called a uniaxially stretched nylon film, and a nylon film stretched once more in a direction perpendicular to the uniaxially stretched direction is called a biaxially stretched nylon film. If the second stretched nylon film layer (15) includes a uniaxially stretched nylon film, better flexibility and elasticity may be achieved than a case of including a biaxially stretched film, and excellent processability and cost-saving effects may be achieved.

According to an embodiment of the present invention, if the moisture of the stretching auxiliary layer (13) is dried in a dry room at 25°C so that the moisture content becomes 1000 ppm or less, the time may be 12 hours or less, preferably 10 hours or less, and more preferably 8 hours or less. If the range is satisfied, the time and energy required for manufacturing a pouch film laminate may be reduced, and excellent processability may be realized.

According to an embodiment of the present invention, the pouch film laminate (1) may have $T_N$ represented by Equation 2 below of 1.5 or more, preferably 2.0 or more, and more preferably 2.5 or more.

$$[\text{Equation 2}]$$

$$T_N = (T_{N,A}) / (T_{N,B})$$

In Equation 2, $T_{N,A}$ is the toughness of the stretching auxiliary layer, and $T_{N,B}$ is the toughness of a stretching auxiliary layer formed of a single-layer stretched nylon film having a thickness of 15 µm.

The toughness of the stretching auxiliary layer may be measured through a stress-strain curve, a graph showing the relationship between stress and strain.

In detail, if a tensile force is applied to a material, the relationship between stress and strain may be represented as a graph. In this case, if the vertical axis of the graph is stress and the horizontal axis is strain, the area under the graph is the toughness of the material. Toughness indicates the degree of material resistance to destruction, and the higher the toughness, the more the material may be stretched before being destroyed.

In this case, the stress of the vertical axis is, if a load is applied to the material, obtained by dividing the load by the cross-sectional area perpendicular to the load direction ($\rho = W/A$, W: kgf, A: mm²), and the horizontal axis strain means the deformation ratio for the size of the original object ($\varepsilon = (l_1-l_0)/(l_0)$, $l_0$: length before load application, $l_1$: length after load application).

In addition, the toughness according to the present invention means the area under the graph if the strain is at the breaking point.

According to an embodiment of the present invention, the pouch film laminate may have an outer layer breakdown voltage of 500 V or higher, preferably 530 V or higher, and more preferably 560 V or higher when a pinhole occurs in the stretching auxiliary layer. Specifically, the outer layer breakdown voltage may be 500 V or higher, preferably 530 V or higher, and more preferably 560 V or higher when a pinhole occurs in the first stretched nylon film layer. If the range is satisfied, it is preferable in that external insulation required by a battery module or pack may be obtained, and sufficient external insulation may be obtained even if a pinhole occurs in either the first or second stretching auxiliary layer.

According to an embodiment of the present invention, the stretching auxiliary layer (13) may include metal oxide particles. The metal oxide particles may remove moisture in the stretching auxiliary layer (13) by being hydroxylated through a reaction with moisture introduced into the stretching auxiliary layer (13). The metal oxide particles may include at least one selected from the group consisting of CaO, MnO, SrO, MgO, and ZnO. Preferably, the metal oxide particles may include at least one of CaO and MgO, which are advantageous for hydroxylation with moisture.

According to an embodiment of the present invention, the stretching auxiliary layer (13) may further include an additive. By including an additive in the stretching auxiliary layer (13), the physical properties of the stretching auxiliary layer (13) may be changed. For example, as an additive for controlling the tensile strength of the stretching auxiliary layer (13), at least one of carbon fiber, glass fiber, and aramid fiber may be added.

**(Surface Protection Layer)**

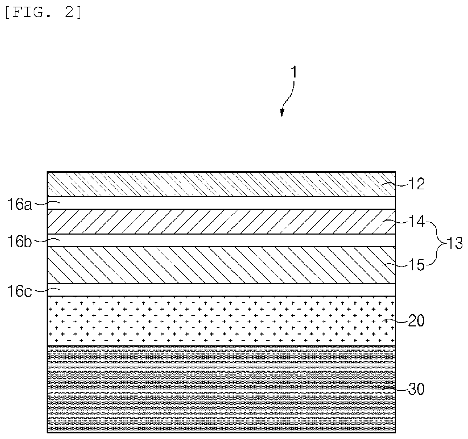

FIG. 2 illustrates an embodiment of a pouch film laminate according to the present invention. Hereinafter, the pouch film laminate according to the present invention will be described with reference to FIG. 2.

According to an embodiment of the present invention, the pouch film laminate (1) may include a surface protection layer (12) on the outermost surface of the pouch film laminate, and more specifically, may include a surface protection layer (12) formed on the stretching auxiliary layer (13). The surface protection layer (12) may play a role in protecting a battery from external impact, and since the surface protection layer (12) directly contacts hardware, insulation and heat resistance are required.

According to an embodiment of the present invention, the material of the surface protection layer (12) may include one single layer or two or more composite layers selected from polyethylene (PE), polypropylene (PP), polyethylene terephthalate (PET), low-density polyethylene (LDPE), and high-density polyethylene (HDPE), and may preferably be formed of polyethylene terephthalate.

The polyethylene terephthalate (PET) has excellent durability and electrical insulation properties, so if the PET film is placed on the surface side, excellent durability and insulation properties may be exhibited. However, in the case of the PET film, the adhesion to an aluminum alloy thin film constituting a gas barrier layer (20) is weak, and the stretching behavior is also different, so if the PET film is placed on the gas barrier layer side, a substrate layer and the gas barrier layer may be peeled off during a molding process, and the gas barrier layer may not be uniformly stretched, which may cause the deterioration of moldability. In contrast, since the stretching auxiliary layer (13) has a similar stretching behavior to the aluminum alloy thin film constituting the gas barrier layer (20), if the stretching auxiliary layer (13) is placed between the polyethylene terephthalate and the gas barrier layer, an effect of improving moldability may be obtained.

According to an embodiment of the present invention, the thickness of the surface protection layer (12) may be 5 $\mu$m to 30 $\mu$m, preferably 5 $\mu$m to 20 $\mu$m, more preferably 5 $\mu$m to 15 $\mu$m, and even more preferably 7 $\mu$m to 15 $\mu$m. If the range is satisfied, the surface protection effect, moldability, and post-molding rigidity may be excellent.

**(Gas Barrier Layer)**

The gas barrier layer (20) is laminated between the stretching auxiliary layer (13) and a sealant layer (30) to secure the mechanical strength of the pouch, block the entry of gas or moisture from the outside of a secondary battery, and prevent electrolyte leakage from the inside of the pouch-type battery case.

According to an embodiment of the present invention, the gas barrier layer (20) may be formed of a metal. For example, the gas barrier layer may be a metal thin film including at least one metal selected from the group consisting of aluminum (Al), copper (Cu), stainless steel (SUS), nickel (Ni), titanium (Ti), and Invar, but is not limited thereto.

According to an embodiment of the present invention, the gas barrier layer (20) may be formed of an aluminum alloy thin film. If forming a gas barrier layer (20) using an aluminum alloy thin film, mechanical strength above a predetermined level may be secured, while being light in weight and securing complementary properties for electrochemical properties by an electrode assembly and electrolyte, as well as heat dissipation or the like. The aluminum alloy thin film may contain elements other than aluminum (Al). For example, the aluminum alloy thin film may contain at least one selected from the group consisting of iron (Fe), copper (Cu), chromium (Cr), manganese (Mn), nickel (Ni), magnesium (Mg), silicon (Si) and zinc (Zn).

According to an embodiment of the present invention, the gas barrier layer (20) may be formed of a stainless steel thin film. Preferably, the gas barrier layer (20) may be manufactured by molding and/or processing a stainless steel thin film. The gas barrier layer (20) formed of stainless steel has relatively low thermal conductivity, which is effective in preventing or delaying heat diffusion to other cells during thermal runaway, and has relatively high toughness, which may suppress cracking of the pouch during using a pouch-type battery. The stainless steel may include at least one element other than iron (Fe), such as copper (Cu), chromium (Cr), manganese (Mn), nickel (Ni), magnesium (Mg), silicon (Si) and zinc (Zn).

According to an embodiment of the present invention, the thickness of the gas barrier layer (20) may be 20 $\mu$m to 150 $\mu$m, preferably 30 $\mu$m to 140 $\mu$m, more preferably 40 $\mu$m to 100 $\mu$m, and even more preferably 60 $\mu$m to 80 $\mu$m. If the range is satisfied, the moldability of the gas barrier layer may be improved, so that when drawing molding a pouch film laminate, the depth of a cup part may be deep, the outer wall of the cup part may be closer to vertical, and the radius of curvature of the corner of the cup part may also be reduced. Accordingly, the volume of an accommodating part increases, so that more electrode assemblies may be laminated on the electrode assemblies accommodated inside, and the energy efficiency per volume may be increased. In addition, without significantly increasing the manufacturing cost and without reducing the thickness of the sealant layer, the thickness of the entire pouch may not be significantly increased, and the sealing durability may not be reduced.

**(Sealant Layer)**

The sealant layer (30) is intended to completely seal the inside of a pouch-type battery case during sealing the pouch-type battery case containing the electrode assembly inside, by mutually thermally bonding at a sealing part. For this, the sealant layer (30) may be formed of a material having excellent thermal bonding strength.

According to an embodiment of the present invention, the sealant layer (30) may be formed of a material having insulation, corrosion resistance, and sealing properties. Preferably, the sealant layer (30) may be formed of a material having insulation and corrosion resistance, since the sealant layer (30) comes into direct contact with the electrode assembly and/or electrolyte inside the pouch-type battery case. In addition, since the sealant layer (30) is required to completely seal the inside of the pouch-type battery case and block material movement between the inside and the outside, the sealant layer (30) may be formed of a material having high sealing properties (for example, excellent thermal bonding strength). To secure such insulation, corrosion resistance, and sealing properties, the sealant layer (30) may be formed of a polymer material.

According to an embodiment of the present invention, the sealant layer (30) may be formed of one or more materials selected from the group consisting of polyethylene, polypropylene, polycarbonate, polyethylene terephthalate, polyvinyl chloride, acrylic polymers, polyacrylonitrile, polyimide, polyamide, cellulose, nylon, polyester, polyparaphenylene benzobisoxazole, polyarylate, and Teflon, and preferably may be formed of a polyolefin resin such as polypropylene (PP) and/or polyethylene (PE). In this case, the polypropylene may be composed of cast polypropylene (CPP), acid modified polypropylene (PPa), polypropylene-ethylene copolymer, and/or polypropylene-butylene-ethylene terpolymer.

According to an embodiment of the present invention, the thickness of the sealant layer (30) may be 30 $\mu$m to 130 $\mu$m, preferably 40 $\mu$m to 120 $\mu$m, and more preferably 60 $\mu$m to 100 $\mu$m. If the thickness of the sealant layer satisfies the range, there is an effect of securing the sealing strength of the sealing part while securing the moldability of the pouch film laminate.

According to an embodiment of the present invention, the sealant layer (30) according to the present invention may have a composite film structure in which two or more materials form layers. For example, the sealant layer (30) may have a multilayer structure. An adhesive layer and/or a skin layer may be disposed between each layer of the sealant layer (30) having the composite film structure. The adhesive layer and/or skin layer may have thermal adhesiveness and thus may play a role in assisting the adhesion between each layer of the sealant layer (30). For example, the adhesive layer and/or skin layer may include a polypropylene-based resin, but is not limited thereto. In addition, the adhesive layer and/or skin layer may be disposed between the sealant layer (30) and the gas barrier layer (20).

The pouch film laminate (1) of the present invention as described above may be manufactured through a manufacturing method of a pouch film laminate known in the art. For example, the pouch film laminate of the present invention may be manufactured through a method of attaching the stretching auxiliary layer (13) to the upper surface of the gas barrier layer (20) through an adhesive, and forming the sealant layer (30) on the lower surface of the gas barrier layer (20) through coextrusion or an adhesive layer, and may be manufactured through a method such as dry lamination, sandwich lamination, or the like. However, the manufacturing method of the pouch film laminate is not limited thereto.

According to an embodiment of the present invention, the pouch film laminate (1) may have a total thickness of 120 $\mu$m to 300 $\mu$m, preferably 140 $\mu$m to 280 $\mu$m, and more preferably 160 $\mu$m to 260 $\mu$m. If the thickness of the pouch film laminate satisfies the range, a molding depth may be increased while minimizing the decrease in a battery accommodation space due to the increase in the thickness of the pouch laminate and the decrease in the sealing durability, etc.

According to an embodiment of the present invention, if the pouch film laminate (1) is cut to a size of 240 mm x 266 mm and then molded to have one cup part with a size of 160 mm x 90 mm in width x length, the molding depth at which a crack occurs may be 10 mm or more, preferably, the molding depth at which a crack occurs may be 12 mm or more, more preferably, the molding depth at which a crack occurs may be 14 mm or more, and even more preferably, the molding depth at which a crack occurs may be 16 mm or more. If the range is satisfied, the cup part molding depth is deepened, which allows for accommodating more electrode assemblies, which is desirable in terms of increasing the energy density per volume of a battery.

## Method for Manufacturing Pouch Film Laminate

Next, a method for manufacturing a pouch film laminate according to the present invention will be described.

A method for manufacturing a pouch film laminate according to the present invention includes (1) a step of sequentially laminating a first stretched nylon film layer and a second stretched nylon film layer to manufacture a stretching auxiliary layer; and (2) a step of sequentially laminating the stretching auxiliary layer, a gas barrier layer, and a sealant layer to manufacture a pouch film laminate, wherein the first stretched nylon film layer and the second stretched nylon film layer are arranged with stretching directions intersecting each other.

First, a step for manufacturing a stretching auxiliary layer by sequentially laminating a first stretched nylon film layer and a second stretched nylon film layer will be described.

The specific compositions, physical properties, or the like of the first stretched nylon film layer and the second stretched nylon film layer have been described above, and thus will be omitted.

According to an embodiment of the present invention, the first stretched nylon film layer and the second stretched nylon film layer are arranged with stretching directions intersecting each other. Since the stretched nylon film has a directionality according to the nature according to stretching, changes occur in the mechanical properties such as tensile strength and elongation between the stretching direction and the vertical direction. In this case, since the pouch forming is performed by stretching in all directions, if a difference is in the tensile properties according to the direction, there may be a problem of reducing moldability due to the imbalance of the properties. That is, if a pouch film laminate is manufactured by arranging the double-layer stretched nylon films stretched in the MD direction by the same method as in FIG. 4, the problem of reduced moldability may occur.

Therefore, the pouch film laminate according to the present invention aims to solve the above problem by arranging the stretching directions of the double-layer stretched nylon films stretched in the MD direction differently from each other as in FIG. 5 and then manufacturing the pouch film laminate.

Specifically, since the stretched nylon films as the double layer are included in the pouch film laminate with different directions from each other, the pouch film laminate may be manufactured to be isotropic, so that even if the pouch film laminate is drawn and molded to manufacture a pouch-type battery case, the difference in the physical properties of the pouch film laminate between the TD direction and the MD direction is not excessive, so that excellent moldability may be achieved.

In addition, since the stretching auxiliary layer includes the stretched nylon films as a double layer, the breakdown voltage may be high if a pinhole occurs, and moisture drying may be easy.

According to one embodiment of the present invention, the first stretched nylon film layer and the second stretched nylon film layer are arranged so that the stretching directions are alternately arranged, and preferably, the first stretched nylon film layer and the second stretched nylon film layer may be arranged so that respective stretching directions intersect by 75° to 90°, more preferably by 80° to 90°, and even more preferably by 90°. If the range is satisfied, the pouch film laminate may be manufactured to be isotropic, so that the difference in the stretching properties of the pouch film laminate according to the stretching direction may not be excessive, so that excellent moldability may be achieved.

The stretching direction may be measured as an angle with the straight line of the stretching direction of the second stretched nylon film layer if the stretching direction of the first stretched nylon film layer is assumed to be a straight line on the x-axis. Preferably, it may be measured as a smaller angle among the angles formed if the straight line of the stretching direction of the first stretched nylon film layer and the straight line of the stretching direction of the second stretched nylon film layer are moved in parallel and intersected.

Next, the step of manufacturing a pouch film laminate by sequentially laminating the stretching auxiliary layer, gas barrier layer, and sealant layer will be described.

The composition, properties, or the like of the stretching auxiliary layer, gas barrier layer, and sealant layer are described above and will be omitted.

The stretching auxiliary layer, gas barrier layer, and sealant layer may be sequentially laminated to manufacture a pouch film laminate.

As shown in FIG. 1, among the stretching auxiliary layer, the first stretched nylon film layer (14) is located on the outer surface of the pouch film laminate (1), and the second stretched nylon film layer (15) is located on the inner surface, specifically, on the gas barrier layer side.

In this case, the method for manufacturing a pouch film laminate according to the present invention may include a step of sequentially laminating the surface protection layer (12), the stretching auxiliary layer (13), the gas barrier layer (20), and the sealant layer (30) described above, as shown in FIG. 2.

Preferably, a pouch film laminate may be manufactured by sequential lamination through a method of attaching the stretching auxiliary layer (13) to the upper surface of the gas barrier layer (20) through an adhesive, attaching the surface protection layer (12) to the upper surface of the stretching auxiliary layer (13) through an adhesive, and forming a sealant layer (30) on the lower surface of the gas barrier layer (20) through coextrusion or an adhesive layer, and the pouch film laminate may be manufactured by a method such as dry lamination or sandwich lamination. However, the method for manufacturing the pouch film laminate is not limited thereto.

**Pouch-type Secondary Battery**

Next, the pouch-type secondary battery according to the present invention will be described.

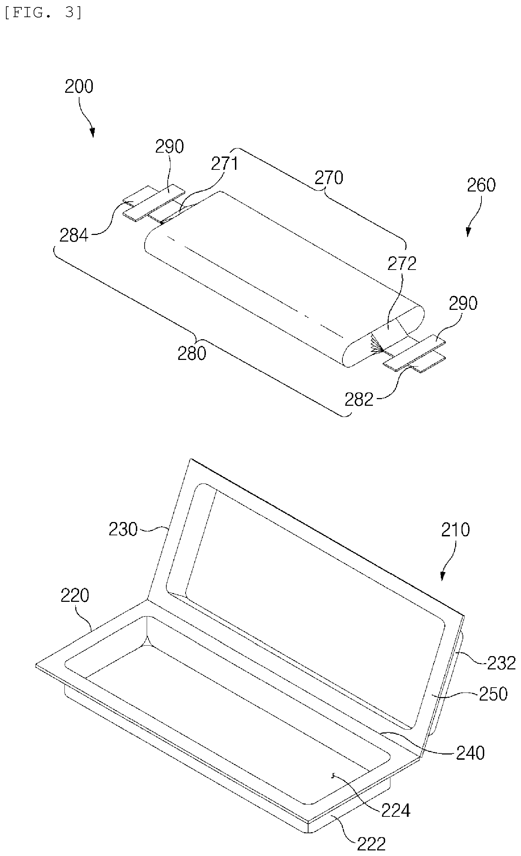

FIG. 3 is an exploded assembly diagram of a pouch-type secondary battery (200) according to the present invention.

As shown in FIG. 3, the pouch-type secondary battery (200) according to the present invention may include a pouch-type battery case (210) manufactured by molding the aforementioned pouch film laminate, and an electrode assembly (260) accommodated in the pouch-type battery case (210). Preferably, the pouch-type secondary battery (200) of the present invention may include a pouch-type battery case (210), an electrode assembly (260), an electrode lead (280), an insulating part (290), and an electrolyte (not shown).

Hereinafter, each component of the pouch-type secondary battery of the present invention will be described in more detail with reference to FIG. 3.

**(Pouch-type Battery Case)**

The pouch-type battery case (210) may be manufactured by molding the pouch film laminate of the present invention described above, and preferably, may be manufactured by drawing molding the pouch film laminate of the present invention. The pouch-type battery case (210) may accommodate an electrode assembly (260) inside. Since the detailed configuration and properties of the pouch film laminate are the same as described above, a detailed description will be omitted.

The pouch film laminate may be molded and stretched by drawing using a punch or the like to manufacture the pouch-type battery case (210). As a result, the pouch-type battery case (210) may include a cup part (222) and a accommodating part (224). The accommodating part (224) is a place for accommodating an electrode assembly, and may mean a receiving space formed in a pocket shape on the inside of the cup part (222) as the cup part (222) is formed.

According to an embodiment of the present invention, the pouch-type battery case (210) may include a first case (220) and a second case (230) as shown in FIG. 3. The first case (220) may include a accommodating part (224) capable of receiving an electrode assembly (260), and the second case (230) may cover the accommodating part (224) from above so that the electrode assembly (260) does not fall out of the pouch-type battery case (210). The first case (220) and the second case (230) may be manufactured with one side connected to each other as shown in FIG. 3, but are not limited thereto and may be manufactured in various ways, such as being manufactured separately from each other.

According to another embodiment of the present invention, if molding a cup part in a pouch film laminate, two symmetrical cup parts (222, 232) may be drawn and molded adjacent to each other in one pouch film laminate. In this case, the cup parts (222, 232) may be formed in each of the first case (220) and the second case (230) as shown in FIG. 3. After the electrode assembly (260) is accommodated in the accommodating part (224) provided in the cup part (222) of the first case (220), a bridge part (240) formed between the two cup parts (222, 232) may be folded so that the two cup parts (222, 232) face each other. In this case, the cup part (232) of the second case (230) may accommodate the electrode assembly (260) from above. Accordingly, since the two cup parts (222, 232) accommodate one electrode assembly (260), an electrode assembly (260) having a thicker thickness may be accommodated than a case of having only one cup part (222). In addition, since one corner of the secondary battery (200) is formed by folding the pouch-type battery case (210), the number of corners to be sealed may be reduced when performing a sealing process later. Accordingly, the process speed of the pouch-type secondary battery (200) may be improved, and the number of sealing processes may be reduced.

The pouch-type battery case (210) may be sealed in a state where the electrode assembly (260) is accommodated such that a part of an electrode lead (280) described below, that is, a terminal part, is exposed. Preferably, if the electrode lead (280) is connected to an electrode tab (270) of the electrode assembly (260) and an insulating part (290) is formed on a portion of the electrode lead (280), the electrode assembly (260) may be accommodated in the accommodating part (224) provided in the cup part (222) of the first case (220), and the second case (230) may cover the accommodating part (224) from above. Then, an electrolyte is injected into the interior of the accommodating part (224), and a sealing part (250) formed on the edges of the first case (220) and the second case (230) may be sealed.

The sealing part (250) may perform a function of sealing the accommodating part (224). Preferably, the sealing part (250) may seal the accommodating part (224) while being formed along the edge of the accommodating part (224).

The temperature for sealing the sealing part (250) may be 180°C to 250°C, preferably 200°C to 250°C, and more preferably 210°C to 240°C. If the sealing temperature satisfies the numerical range, the pouch-type battery case (210) may secure sufficient sealing strength by thermal adhesion.

**(Electrode Assembly)**

The electrode assembly (260) may be inserted into the pouch-type battery case (210) and sealed by the pouch-type battery case (210) after injecting the electrolyte.

The electrode assembly (260) may be formed by sequentially stacking a positive electrode, a separator, and a negative electrode. Preferably, the electrode assembly (260) may include two types of electrodes, a positive electrode and a negative electrode, and a separator interposed between the electrodes to mutually insulate the electrodes.

The positive electrode and the negative electrode may each have a structure in which an active material slurry is applied to an electrode current collector in the form of a metal foil or metal mesh containing aluminum and copper. The slurry may be formed by stirring a granular active material, an auxiliary conductor, a binder, and a conductive material while a solvent is added. The solvent may be removed in a subsequent process.

By applying slurries containing an electrode active material and a binder and/or a conductive material to a positive electrode current collector and a negative electrode current collector to manufacture a positive electrode and a negative electrode, and laminating them on both sides of a separator, an electrode assembly (260) may be manufactured in a predetermined shape. The types of the electrode assembly (260) may include, but are not limited to, a stack type, a jelly roll type, a stack and folding type or the like.

The electrode assembly (260) may include an electrode tab (270).

The electrode tab (270) may be connected to the positive and negative electrodes of the electrode assembly (260), respectively, and protrude outward from the electrode assembly (260) to serve as a path through which electrons may move between the inside and the outside of the electrode assembly (260). The electrode current collector included in the electrode assembly (260) may be composed of a portion where the electrode active material is applied and a terminal part where the electrode active material is not applied, i.e., a non-coated portion. The electrode tab (270) may be formed by cutting the non-coated portion or by connecting a separate conductive member to the non-coated portion by ultrasonic welding, or the like. As shown in FIG. 3, the electrode tab (270) may protrude in different directions from the electrode assembly (260), but is not limited thereto, and may be formed by protruding in various directions, such as protruding in parallel in the same direction from one side.

**(Electrode Lead)**

The electrode lead (280) may supply electricity to the outside of the secondary battery (200). The electrode lead (280) may be connected to the electrode tab (270) of the electrode assembly (260) by spot welding or the like.

The electrode lead (280) may be connected to the electrode assembly (260) and may protrude to the outside of the pouch-type battery case (210) via the sealing part (250). Preferably, one end of the electrode lead (280) may be connected to the electrode assembly (260), particularly the electrode tab (270), and the other end of the electrode lead (280) may protrude to the outside of the pouch-type battery case (210).

The electrode lead (280) may include a positive lead (282) having one end connected to the positive tab (272) and extending in the protruding direction of the positive tab (272), and a negative lead (284) having one end connected to the negative tab (271) and extending in the protruding direction of the negative tab (271). Both the positive lead (282) and the negative lead (284) may have other ends protruding outward from the pouch-type battery case (210). Accordingly, electricity generated inside the electrode assembly (260) may be supplied to the outside. In addition, since the positive tab (272) and the negative tab (271) may be formed to protrude in various directions, the positive lead (282) and the negative lead (284) may also extend in various directions, respectively. The positive lead (282) and the negative lead (284) may be made of different materials. That is, the positive lead (282) may be made of the same aluminum (Al) material as the positive electrode current collector, and the negative lead (284) may be made of the same copper (Cu) material as the negative electrode current collector or a copper material coated with nickel (Ni). A portion of the electrode lead (280) protruding outside the pouch-type battery case (210) may be a terminal part and may be electrically connected to an external terminal.

**(Insulating Part)**

The insulating part (290) prevents electricity generated from the electrode assembly (260) from flowing to the pouch-type battery case (210) through the electrode lead (280) and may maintain the sealing of the pouch-type battery case (210). For this, the insulating part (290) may be formed of a non-conductive material that does not conduct electricity well. In general, the insulating part (290) is often made of an insulating tape or film that is easy to attach to the electrode lead (280) and has a relatively thin thickness, but is not limited thereto, and any material capable of insulating the electrode lead (280) may be used.

The insulating part (290) may be disposed to surround the outer surface of the electrode lead (280). Preferably, at least a portion of the electrode lead (280) may be surrounded by the insulating part (290). In this case, the insulating part (290) may be disposed between the electrode lead (280) and the pouch-type battery case (210). The insulating part (290) may be positioned limited to the sealing part (250) where the first case (220) and the second case (230) of the pouch-type battery case (210) are thermally fused, and may attach the electrode lead (280) to the pouch-type battery case (210).

**(Electrolyte)**

The pouch-type secondary battery (200) according to the present invention may further include an electrolyte (not shown) that is injected into the pouch-type battery case (210). The electrolyte is for moving lithium ions produced by the electrochemical reaction of the electrode during charging/discharging the secondary battery (200), and may include a non-aqueous organic electrolyte that is a mixture of a lithium salt and an organic solvent, or a polymer using a polymer electrolyte. Further, the electrolyte may include a sulfide-based, oxide-based or polymer-based solid electrolyte, and the solid electrolyte may have flexibility that is easily deformed by an external force.

Hereinafter, the present invention will be described in more detail through specific examples. However, the examples below are only examples to help the understanding of the present invention, and do not limit the scope of the present invention. It is obvious to those skilled in the art that various changes and modifications are possible within the scope and technical idea of the present disclosure, and it is natural that such changes and modifications fall within the scope of the appended claims.

## Examples and Comparative Examples

### Example 1: Manufacturing of Pouch Film Laminate

A first stretched nylon film (uniaxially stretched nylon film) having a thickness of 15 $\mu$m, an adhesive layer having a thickness of 3 $\mu$m, and a second stretched nylon film (uniaxially stretched nylon film) having a thickness of 25 $\mu$m were sequentially laminated to manufacture a stretching auxiliary layer. In this case, the first stretched nylon film and the second stretched nylon film were laminated so that stretching directions intersected each other by 90°.

Thereafter, an adhesive layer with a thickness of 3 $\mu$m, the stretching auxiliary layer manufactured above, an adhesive layer with a thickness of 3 $\mu$m, and a polyethylene terephthalate (PET) film with a thickness of 12 $\mu$m as a surface protection layer were sequentially laminated on one surface of an aluminum alloy film with a thickness of 80 $\mu$m, and a polypropylene (PP) film with a thickness of 80 $\mu$m as a sealant layer was sequentially laminated on the other surface of the aluminum alloy film.

As a result, a pouch film laminate having a structure in which a polypropylene layer/aluminum alloy film/adhesive layer/second stretched nylon film/adhesive layer/first stretched nylon film/adhesive layer/polyethylene terephthalate layer are sequentially laminated was manufactured.

### Example 2: Manufacturing of Pouch Film Laminate

A pouch film laminate was manufactured in the same manner as in Example 1, except for using an aluminum alloy film with a thickness of 60 $\mu$m.

### Example 3: Manufacturing of Pouch Film Laminate

A pouch film laminate was manufactured in the same manner as in Example 1, except for using an aluminum alloy film with a thickness of 40 $\mu$m.

### Comparative Example 1: Manufacturing of Pouch Film Laminate

A pouch film laminate was manufactured in the same manner as in Example 1, except that the first stretched nylon film and the second stretched nylon film were laminated so that the stretching directions did not intersect each other at 90° but were parallel to each other.

### Comparative Example 2: Manufacturing of Pouch Film Laminate

A pouch film laminate was manufactured in the same manner as in Example 1, except that the first stretched nylon film and the second stretched nylon film were laminated so that the stretching directions did not intersect at 90° to each other but were parallel to each other, and an aluminum alloy film having a thickness of 60 μm was used.

**Comparative Example 3: Manufacturing of Pouch Film Laminate**

A pouch film laminate was manufactured in the same manner as in Example 1, except that the first stretched nylon film and the second stretched nylon film were laminated so that the stretching directions did not intersect at 90° to each other but were parallel to each other, and an aluminum alloy film having a thickness of 40 μm was used.

**Comparative Example 4: Manufacturing of Pouch Film Laminate**

A stretched nylon film (uniaxially stretched nylon film) with a thickness of 25 μm was manufactured as a stretching auxiliary layer.
Thereafter, an adhesive layer with a thickness of 3 μm, the manufactured stretching auxiliary layer, an adhesive layer with a thickness of 3 μm, and a polyethylene terephthalate (PET) film with a thickness of 12 μm as a surface protection layer were sequentially laminated on one side of an aluminum alloy film with a thickness of 80 μm, and a polypropylene (PP) film with a thickness of 80 μm as a sealant layer was sequentially laminated on the other side of the aluminum alloy film.
As a result, a pouch film laminate having a structure in which a polypropylene layer/aluminum alloy film/adhesive layer/stretched nylon film/adhesive layer/polyethylene terephthalate layer were sequentially laminated was manufactured.

**Comparative Example 5: Manufacturing of Pouch Film Laminate**

A stretched nylon film (uniaxially stretched nylon film) with a thickness of 25 μm was manufactured as a stretching auxiliary layer.
Thereafter, an adhesive layer with a thickness of 3 μm, the manufactured stretching auxiliary layer, an adhesive layer with a thickness of 3 μm, and a polyethylene terephthalate (PET) film with a thickness of 12 μm as a surface protection layer were sequentially laminated on one side of an aluminum alloy film with a thickness of 60 μm, and a polypropylene (PP) film with a thickness of 80 μm as a sealant layer was sequentially laminated on the other side of the aluminum alloy film.
As a result, a pouch film laminate having a structure in which a polypropylene layer/aluminum alloy film/adhesive layer/stretched nylon film/adhesive layer/polyethylene terephthalate layer were sequentially laminated was manufactured.

**Comparative Example 6: Manufacturing of Pouch Film Laminate**

A stretched nylon film (uniaxially stretched nylon film) with a thickness of 15 μm was manufactured as a stretching auxiliary layer.
Thereafter, an adhesive layer with a thickness of 3 μm, the manufactured stretching auxiliary layer, an adhesive layer with a thickness of 3 μm, and a polyethylene terephthalate (PET) film with a thickness of 12 μm as a surface protection layer were sequentially laminated on one side of an aluminum alloy film with a thickness of 40 μm, and a polypropylene (PP) film with a thickness of 80 μm as a sealant layer was sequentially laminated on the other side of the aluminum alloy film.
As a result, a pouch film laminate having a structure in which a polypropylene layer/aluminum alloy film/adhesive layer/stretched nylon film/adhesive layer/polyethylene terephthalate layer were sequentially laminated was manufactured.
The above manufacturing method is summarized and shown in [Table 1] below.

[Table 1]

| | Surface protection layer | | Stretching auxiliary layer | | | Gas barrier layer | Sealant layer |
|---|---|---|---|---|---|---|---|
| | Material | Thickness (μm) | Stretching direction intersecting degree of first and second stretched nylon films (°) | First stretched nylon film thickness (μm) | Second stretched nylon film thickness (μm) | Thickness (μm) | Thickness (μm) |
| Example 1 | PET | 12 | 90 | 15 | 25 | 80 | 80 |
| Example 2 | PET | 12 | 90 | 15 | 25 | 60 | 80 |
| Example 3 | PET | 12 | 90 | 15 | 25 | 40 | 80 |
| Comparative Example 1 | PET | 12 | 0 | 15 | 25 | 80 | 80 |
| Comparative Example 2 | PET | 12 | 0 | 15 | 25 | 60 | 80 |
| Comparative Example 3 | PET | 12 | 0 | 15 | 25 | 40 | 80 |
| Comparative Example 4 | PET | 12 | - | 25 | - | 80 | 80 |
| Comparative Example 5 | PET | 12 | - | 25 | - | 60 | 80 |
| Comparative Example 6 | PET | 12 | - | 15 | - | 40 | 80 |

**Experimental Example 1: Measurement of Tensile Strength of Pouch Film Laminate in MD and TD Directions**

The tensile strength of each of the pouch film laminates manufactured according to Examples 1 to 3 and Comparative Examples 1 to 6 in the MD and TD directions was measured.

In detail, each of the pouch film laminates manufactured according to Examples 1 to 3 and Comparative Examples 1 to 6 was cut to a length (MD direction) x width (TD direction) of 120 mm x 15 mm to manufacture a sample. In this case, the sample was cut so that the length direction was identical to the MD direction of the pouch film laminate. Thereafter, the sample was fixed to a UTM device with a grip gap of 50 mm and was pulled at a tensile speed of 5 mm/min, and the strength at which the sample was broken was measured as the tensile strength (N/15 mm).

In addition, each of the pouch film laminates manufactured according to Examples 1 to 3 and Comparative Examples 1 to 6 was cut to a length (MD direction) x width (TD direction) of 15 mm x 120 mm to manufacture a sample. In this case, the sample was cut so that the length direction was identical to the TD direction of the pouch film laminate. After that, the sample was fixed to a UTM device with a grip gap of 50 mm and was pulled at a tensile speed of 5 mm/min, and the strength at which the sample was broken was measured as the tensile strength (N/15 mm).

The measured tensile strengths in the MD direction and TD direction are shown in [Table 2] to [Table 4] below.

**Experimental Example 2: Measurement of Moisture Drying Time and Toughness of Stretching Auxiliary Layer**

Each of the stretching auxiliary layers manufactured according to Examples 1 to 3 and Comparative Examples 1 to 6 was dried in a dry room at 25°C, respectively, and the time required for the moisture content to become 1000 ppm or less was measured.

In detail, each of the stretching auxiliary layers manufactured according to Examples 1 to 3 and Comparative Examples 1 to 6 was dried in a dry room at 25°C, and the moisture content of each was measured every 2, 4, 6, 8, 16, and 24 hours. In this case, the time required for the moisture content to become 1000 ppm or less was measured as the moisture drying time. The measured results are shown in [Table 2] to [Table 4] below.

In addition, the toughness of the stretching auxiliary layers manufactured according to Examples 1 to 3 and Comparative Examples 1 to 6 was measured by integrating the area under the graph when the strain was at the breaking point on a S-S curve graph. Based on the toughness of a single-layer stretched nylon film with a thickness of 15 $\mu$m (Comparative Example 6), the relative value of the toughness in each of the Examples and Comparative Examples are shown in [Table 2] to [Table 4] below.

**Experimental Example 3: Evaluation of Moldability of Pouch Film Laminate and Measurement of Breakdown Voltage (V) when Pinhole Exists in Stretching Auxiliary Layer**

The moldability of each of the pouch film laminates manufactured according to Examples 1 to 3 and Comparative Examples 1 to 6 was evaluated, and the outer layer breakdown voltage (V) when a pinhole exists in the stretching auxiliary layer was measured.

Specifically, as a method for evaluating the moldability of the pouch film laminate, the pouch film laminate was cut to the same size so that the length (MD direction) x width (TD direction) was 240 mm x 266 mm, and then a molding depth was changed in a battery case forming device having one molding part with the length (MD direction) x width (TD direction) of 160 mm x 90 mm, and a molding depth when cracks occurred was recorded. Here, the punch and the molding part of the battery case molding device were filleted at the corners and edges, and for the punch, the corners had a radius of curvature of 2 mm and the edges had a radius of curvature of 0.5 mm, and for the molding part, the corners had a radius of curvature of 2.5 mm and the edges had a radius of curvature of 1.5 mm. In addition, the clearance between the punch and the molding part was 0.5 mm.

In addition, as a method of measuring the outer layer breakdown voltage (V) when a pinhole exists in the stretching auxiliary layer, a pinhole with a diameter of 0.5 mm was formed in the first stretched nylon film layer by a laser, and then the pouch film laminates were cut to the same size so that the length (MD direction) x width (TD direction) was 100 mm x 266 mm. After that, the gas barrier layer (aluminum layer) and the surface protection layer (polyethylene terephthalate layer) were electrically connected, and then the voltage was increased at a rate of 100 V/s with AC. If the current value was 0.5 mA or higher, the insulation was considered to be broken down, and the voltage value applied at that time was measured as the outer layer breakdown voltage (V).

The measured molding depth (mm) and outer layer breakdown voltage (V) are listed in [Table 2] to [Table 4] below.

In this case, examples and comparative examples when the aluminum alloy film was 80 $\mu$m, 60 $\mu$m, and 40 $\mu$m are listed in [Table 2] to [Table 4], respectively.

[Table 2]

| | Experimental Example 1 | | | Experimental Example 2 | | Experimental Example 3 | |
|---|---|---|---|---|---|---|---|
| | Tensile strength (N/15 mm) | | | Moisture drying time (h) | Toughness (%) | Molding depth (mm) | Break down voltage (V) |
| | TD direction | MD direction | $TS_{TM}$ | | | | |
| Example 1 | 265 | 260 | 1.019 | 8 | 260 | 16.5 | 566 |
| Comparative Example 1 | 296 | 237 | 1.249 | 8 | 260 | 15.5 | 566 |
| Comparative Example 4 | 273 | 219 | 1.247 | 16 | 136 | 14.0 | 452 |

Referring to [Table 2] above, it can be confirmed that in the cases of Example 1 and Comparative Example 1, which are composed of double-layer stretched nylon films, they showed better results in terms of moisture drying time, toughness of the nylon film, molding depth, and breakdown voltage than in Comparative Example 4, which is composed of a single-layer stretched nylon film.

In addition, in the case of Example 1, where the double-layer stretched nylon films were laminated in an alternating direction, the ratio of the tensile strength in the TD direction to the MD direction was not as large as in Comparative Example 1, where the films were laminated in a parallel direction, while showing an excellent effect in molding depth.

In addition, if comparing [Table 3] to [Table 4] below with [Table 2] above, it can be seen that when the thickness of the aluminum alloy film was 80 um, a better molding depth was shown compared to the cases with 60 $\mu$m or 40 um.

[Table 3]

| | Experimental Example 1 | | | Experimental Example 2 | | Experimental Example 3 | |
|---|---|---|---|---|---|---|---|
| | Tensile strength (N/15 mm) | | | Moisture drying time (h) | Toughness (%) | Molding depth (mm) | Break down voltage (V) |
| | TD direction | MD direction | $TS_{TM}$ | | | | |
| Example 2 | 255 | 248 | 1.028 | 8 | 260 | 15.5 | 566 |
| Comparative Example 2 | 264 | 212 | 1.245 | 8 | 260 | 14.0 | 566 |
| Comparative Example 5 | 259 | 188 | 1.378 | 16 | 136 | 13.0 | 452 |

Referring to [Table 3] above, it can be confirmed that in the cases of Example 2 and Comparative Example 2, which are composed of double-layer stretched nylon films, better results were shown in terms of moisture drying time, toughness of the nylon film, molding depth, and breakdown voltage than in Comparative Example 5, which is composed of a single-layer stretched nylon film.

In addition, in the case of Example 2, where the double-layer stretched nylon films were laminated in an alternating direction, the ratio of the tensile strength in the TD direction to the MD direction was not as large as in Comparative Example 2, where the films were laminated in a parallel direction, while showing an excellent effect in molding depth.

In addition, if comparing [Table 4] below with [Table 3] above, it can be seen that when the thickness of the aluminum alloy film was 60 $\mu$m, better molding depth was shown than a case with 40 $\mu$m.

[Table 4]

| | Experimental Example 1 | | | Experimental Example 2 | | Experimenta 1 Example 3 | |
|---|---|---|---|---|---|---|---|
| | Tensile strength (N/15 mm) | | | Moisture drying time (h) | Toughness (%) | Molding depth (mm) | Break down voltage (V) |
| | TD direction | MD direction | $TS_{TM}$ | | | | |
| Example 3 | 189 | 182 | 1.038 | 8 | 260 | 10.5 | 566 |
| Comparative Example 3 | 201 | 159 | 1.264 | 8 | 260 | 9.5 | 566 |
| Comparative Example 6 | 183 | 142 | 1.289 | 8 | 100 | 9.0 | 452 |

Referring to [Table 4] above, it can be confirmed that in the cases of Example 3 and Comparative Example 3, which are composed of double-layer stretched nylon films, better results were shown in terms of moisture drying time, toughness of the nylon film, molding depth, and breakdown voltage than Comparative Example 6, which is composed of a single-layer stretched nylon film.

In addition, in the case of Example 3, where the double-layer stretched nylon films were laminated in an alternating direction, the ratio of the tensile strength in the TD direction to the MD direction was not as large as in Comparative Example 3, where the films were laminated in a parallel direction, while showing a better effect in terms of molding depth.

[Description of Symbols]

1: Pouch film laminate
12: Surface protection layer
13: Stretching auxiliary layer
14: First stretched nylon film layer
15: Second stretched nylon film layer
16a, 16b, 16c: Adhesive layers
20: Gas barrier layer

30: Sealant layer
200: Pouch-type secondary battery
210: Pouch-type battery case
220: First case
222: Cup part
224: Accommodating part
230: Second case
232: Cup part
240: Bridge part
250: Sealing part
260: Electrode assembly
270: Electrode tab
272: Positive tab
271: Negative tab
280: Electrode lead
282: Positive lead
284: Negative lead
290: Insulating part

**Claims**

1. A pouch film laminate comprising a stretching auxiliary layer, a gas barrier layer, and a sealant layer, sequentially laminated, wherein

   the stretching auxiliary layer comprises a first stretched nylon film layer and a second stretched nylon film layer, sequentially laminated, and
   the pouch film laminate has a $TS_{TM}$ value represented by the following Equation 1 of 0.80 to 1.24:

$$[Equation\ 1]$$

$$TS_{TM} = (TS_T)/(TS_M)$$

   in Equation 1, $TS_T$ is a width direction tensile strength (N/15 mm) of the pouch film laminate, and $TS_M$ is a longitudinal direction tensile strength (N/15 mm) of the pouch film laminate.

2. The pouch film laminate according to claim 1, wherein a thickness of the stretching auxiliary layer is 10 $\mu$m to 80 $\mu$m.

3. The pouch film laminate according to claim 1, wherein a thickness of the first stretched nylon film layer is 5 $\mu$m to 40 $\mu$m.

4. The pouch film laminate according to claim 1, wherein a thickness of the second stretched nylon film layer is 5 $\mu$m to 40 $\mu$m.

5. The pouch film laminate according to claim 1, wherein the first stretched nylon film layer and the second stretched nylon film layer are formed of the same material.

6. The pouch film laminate according to claim 1, wherein the pouch film laminate has $T_N$ represented by the following Equation 2 of 1.5 or more:

$$[Equation\ 2]$$

$$T_N = (T_{N,A})/(T_{N,B})$$

in Equation 2, $T_{N,A}$ is a toughness of the stretching auxiliary layer, and $T_{N,B}$ is a toughness of a stretching auxiliary layer formed of a single-layer stretched nylon film having a thickness of 15 $\mu$m.

7. The pouch film laminate according to claim 1, further comprising a surface protection layer formed on the stretching auxiliary layer.

8. The pouch film laminate according to claim 1, wherein a thickness of the gas barrier layer is 20 $\mu$m to 150 $\mu$m.

9. The pouch film laminate according to claim 1, wherein a thickness of the sealant layer is 30 $\mu$m to 130 $\mu$m.

10. A method for manufacturing a pouch film laminate, the method comprising:

    a step of sequentially laminating a first stretched nylon film layer and a second stretched nylon film layer to manufacture a stretching auxiliary layer; and
    a step of sequentially laminating the stretching auxiliary layer, a gas barrier layer, and a sealant layer to manufacture a pouch film laminate, wherein
    the first stretched nylon film layer and the second stretched nylon film layer are arranged with stretching directions intersecting each other.

11. The method for manufacturing a pouch film laminate according to claim 10, wherein the first stretched nylon film layer and the second stretched nylon film layer are arranged so that stretching directions intersect at an angle of 75° to 90°.

12. A pouch-type secondary battery comprising a pouch-type battery case manufactured by drawing molding the pouch film laminate of claim 1.

[FIG. 1]

[FIG. 2]

[FIG. 3]

[FIG. 4]

MD

14

MD

15

[FIG. 5]

MD

14

MD

15

[FIG. 6]

# EP 4 769 688 A1

<table>
<tr><td colspan="2"></td><td colspan="2">INTERNATIONAL SEARCH REPORT</td><td colspan="2">International application No.<br>**PCT/KR2024/096532**</td></tr>
</table>

| | |
|---|---|
| **A.** | **CLASSIFICATION OF SUBJECT MATTER** |
| | **H01M 50/131**(2021.01)i; **H01M 50/126**(2021.01)i; **H01M 50/133**(2021.01)i; **H01M 50/121**(2021.01)i; **H01M 50/105**(2021.01)i; **B32B 27/08**(2006.01)i |
| | According to International Patent Classification (IPC) or to both national classification and IPC |

| | |
|---|---|
| **B.** | **FIELDS SEARCHED** |
| | Minimum documentation searched (classification system followed by classification symbols) |
| | H01M 50/131(2021.01); H01M 2/02(2006.01); H01M 50/10(2021.01); H01M 50/105(2021.01); H01M 50/124(2021.01); H01M 50/531(2021.01) |
| | Documentation searched other than minimum documentation to the extent that such documents are included in the fields searched |
| | Korean utility models and applications for utility models: IPC as above<br>Japanese utility models and applications for utility models: IPC as above |
| | Electronic data base consulted during the international search (name of data base and, where practicable, search terms used) |
| | eKOMPASS (KIPO internal) & keywords: 연신 보조층(stretching auxiliary layer), 가스 배리어층(gas barrier layer), 실런트층 (sealant layer), 파우치 필름 적층체(pouch film laminate), 인장 강도(tensile strength) |

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X<br><br>A | KR 10-2023-0145964 A (LG ENERGY SOLUTION, LTD.) 18 October 2023 (2023-10-18)<br>See paragraphs [0040]-[0084], claims 15-16 and figures 1-2. | 1-9,12<br><br>10-11 |
| A | KR 10-2017-0142624 A (BTL ADVANCED MATERAL CO., LTD.) 28 December 2017 (2017-12-28)<br>See claims 1-20 and figure 4. | 1-12 |
| A | KR 10-2020-0025101 A (LG CHEM, LTD.) 10 March 2020 (2020-03-10)<br>See claims 1-5 and figure 1. | 1-12 |
| A | KR 10-2001-0052645 A (DAINIPPON PRINTING CO., LTD.) 25 June 2001 (2001-06-25)<br>See claims 1-89 and figure 1a. | 1-12 |
| A | KR 10-2013-0011976 A (HANWHA CHEMICAL CORPORATION) 30 January 2013 (2013-01-30)<br>See claims 1-17 and figure 1. | 1-12 |

| | |
|---|---|
| ☐ Further documents are listed in the continuation of Box C. | ☑ See patent family annex. |

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **18 February 2025** | **18 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

25

**INTERNATIONAL SEARCH REPORT**
Information on patent family members

| International application No. |
|---|
| **PCT/KR2024/096532** |

| Patent document cited in search report | | | Publication date (day/month/year) | Patent family member(s) | | | Publication date (day/month/year) |
|---|---|---|---|---|---|---|---|
| KR | 10-2023-0145964 | A | 18 October 2023 | CN | 113782878 | A | 10 December 2021 |
| | | | | CN | 215955369 | U | 04 March 2022 |
| | | | | EP | 4135105 | A1 | 15 February 2023 |
| | | | | JP | 2023-526609 | A | 22 June 2023 |
| | | | | JP | 2024-026624 | A | 28 February 2024 |
| | | | | JP | 7416979 | B2 | 17 January 2024 |
| | | | | KR | 10-2021-0152969 | A | 16 December 2021 |
| | | | | KR | 10-2611432 | B1 | 08 December 2023 |
| | | | | US | 2023-0207931 | A1 | 29 June 2023 |
| | | | | WO | 2021-251736 | A1 | 16 December 2021 |
| KR | 10-2017-0142624 | A | 28 December 2017 | | None | | |
| KR | 10-2020-0025101 | A | 10 March 2020 | CN | 111108622 | A | 05 May 2020 |
| | | | | CN | 111108622 | B | 11 November 2022 |
| | | | | EP | 3671886 | A1 | 24 June 2020 |
| | | | | EP | 3671886 | B1 | 15 May 2024 |
| | | | | ES | 2981317 | T3 | 08 October 2024 |
| | | | | HU | E066960 | T2 | 28 September 2024 |
| | | | | JP | 2020-537291 | A | 17 December 2020 |
| | | | | JP | 7049550 | B2 | 07 April 2022 |
| | | | | PL | 3671886 | T3 | 05 August 2024 |
| | | | | TW | 202010166 | A | 01 March 2020 |
| | | | | TW | 202339337 | A | 01 October 2023 |
| | | | | US | 11682809 | B2 | 20 June 2023 |
| | | | | US | 2021-0083233 | A1 | 18 March 2021 |
| | | | | WO | 2020-045814 | A1 | 05 March 2020 |
| KR | 10-2001-0052645 | A | 25 June 2001 | CA | 2334724 | A1 | 19 October 2000 |
| | | | | CA | 2334724 | C | 16 September 2008 |
| | | | | CN | 100353584 | C | 05 December 2007 |
| | | | | CN | 101159320 | A | 09 April 2008 |
| | | | | CN | 101159320 | B | 26 December 2012 |
| | | | | CN | 1314008 | A | 19 September 2001 |
| | | | | DE | 60036354 | T2 | 29 May 2008 |
| | | | | EP | 1102336 | A1 | 23 May 2001 |
| | | | | EP | 1102336 | B1 | 12 September 2007 |
| | | | | JP | 2000-294204 | A | 20 October 2000 |
| | | | | JP | 2000-334891 | A | 05 December 2000 |
| | | | | JP | 2000-340186 | A | 08 December 2000 |
| | | | | JP | 2000-340187 | A | 08 December 2000 |
| | | | | JP | 2001-006631 | A | 12 January 2001 |
| | | | | JP | 2001-030407 | A | 06 February 2001 |
| | | | | JP | 2001-035453 | A | 09 February 2001 |
| | | | | JP | 2001-035454 | A | 09 February 2001 |
| | | | | JP | 2001-055243 | A | 27 February 2001 |
| | | | | JP | 2001-093482 | A | 06 April 2001 |
| | | | | JP | 4372898 | B2 | 25 November 2009 |
| | | | | JP | 4390922 | B2 | 24 December 2009 |
| | | | | JP | 4440376 | B2 | 24 March 2010 |
| | | | | JP | 4668370 | B2 | 13 April 2011 |
| | | | | JP | 4668373 | B2 | 13 April 2011 |
| | | | | JP | 4736146 | B2 | 27 July 2011 |

Form PCT/ISA/210 (patent family annex) (July 2022)

| Patent document cited in search report | | Publication date (day/month/year) | Patent family member(s) | | | Publication date (day/month/year) |
|---|---|---|---|---|---|---|
| | | | JP | 4831268 | B2 | 07 December 2011 |
| | | | JP | 4972816 | B2 | 11 July 2012 |
| | | | JP | 5089833 | B2 | 05 December 2012 |
| | | | JP | 5103691 | B2 | 19 December 2012 |
| | | | TW | 499768 | B | 21 August 2002 |
| | | | US | 7285334 | B1 | 23 October 2007 |
| | | | WO | 00-62354 | A1 | 19 October 2000 |
| KR 10-2013-0011976 | A | 30 January 2013 | WO | 2013-012290 | A2 | 24 January 2013 |
| | | | WO | 2013-012290 | A3 | 11 April 2013 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230157720